# EUROPEAN PATENT APPLICATION

(11) **EP 4 790 662 A2**
(43) Date of publication of application: **12.08.2026**
(21) Application number: 26176514.3
(22) Date of filing: 13.06.2025
(51) Int. Cl.: G06V 20/52

(54) **OPTOELECTRONIC SAFETY DEVICE, ITS METHOD OF OPERATION AND THE SAFETY SYSTEM COMPRISING THAT DEVICE**

(30) Priority: 14.06.2024 IT 202400013681
(62) Document number(s) of the earlier application(s) in accordance with Art. 76 EPC: 25182772.1 / 4 664 424
(71) Applicant: Armonia S.r.l., 36063 Marostica (VI) (IT)
(72) Inventor: MILANI, Lorenzo, 36063 MAROSTICA (VI) (IT); CAPPELLINI, Anna Maria Chiara, 36063 MAROSTICA (VI) (IT)
(74) Representative: Studio Torta S.p.A.

(57) **Abstract**

An opto-electronic safety device (1) for an industrial plant (100) provided with a machine (101) positioned within a predetermined monitoring area (A) and comprising: imaging means (14) configured to capture digital images (D) of the monitoring area (A); and an electronic control unit (16), which is configured to:
Command the imaging means (14) to capture digital images (D) for a predetermined monitoring period,
process the digital images (D) to determine a dangerous condition when a movement of persons within the monitoring area (A) is determined during that monitoring period, and
prevent the machine from starting (101) if a dangerous condition is determined, or vice versa
allow the machine to start (101) if the hazardous condition is not determined.

## Description

### TECHNICAL FIELD

The present invention relates to an optoelectronic safety device for industrial plants, to its method of operation, and to a safety system comprising such a device. Use to which the present invention makes explicit reference, without loss of generality.

### STATE OF THE ART

As is well known, industrial plants that present a hazardous condition during their operation are generally equipped with protective perimeters to prevent unauthorised access.

For example, such a hazardous condition occurs when operating parts of the machine are in motion, under pressure and/or at high temperature.

Protective perimeters are generally equipped with safety doors and electronically controlled safety locking devices that lock the safety doors when the dangerous condition is present.

In particular, starting the machine is only permitted in a safe condition, i.e. when the safety doors are closed and locked by the respective safety locking devices. Conversely, the unlocking of the safety locking devices and the opening of the safety doors are only permitted when the dangerous condition has ceased.

Unfortunately, in some cases, it can happen that an operator accidentally gets stuck inside the safety perimeter even after the safety doors have been closed and locked, and thus the machine can operate in a dangerous condition for the operator, with the obvious inconveniences that this entails.

To overcome this type of inconvenience, some manufacturers have marketed safety devices that continuously monitor the perimeter of the machine during its operation, so that it can be stopped immediately if a dangerous condition is determined, such as a person in the immediate vicinity of the machine.

For example, such safety devices may be based on a laser scanner or RADAR (Radio Detection and Ranging) technology, and are adapted to detect any objects or people in the immediate vicinity of the machine during its operation.

Unfortunately, laser scanner-based safety devices are very expensive and also have a very narrow field of view, thus limiting the extent of the area that can be monitored.

Radar devices, on the other hand, do not allow the precise definition of the perimeter of the area to be monitored around the machine, and often give rise to false positives caused, for example, by people or objects moving outside the protective barrier. This clearly causes unnecessary downtime, negatively impacting machine productivity.

In addition, the known devices described above have proven to be easy to be tampered with. In fact, it is sufficient to place an immovable obstacle in front of them to ensure that they always detect a lack of movement, so as to prevent their safety intervention.

The aim of the present invention is therefore to provide an optoelectronic safety device that can overcome the above-mentioned drawbacks and increase safety for operators of industrial plants.

### SUMMARY OF THE INVENTION

In accordance with the aforementioned objectives, according to the present invention an optoelectronic safety device is provided as defined in claim 1 and preferably, but not necessarily, in any of the claims dependent thereon.

In addition, according to the present invention, a method of operating an optoelectronic safety device and a safety system are also provided according to the respective claims.

The claims describe preferred forms of embodiment of the present invention and form an integral part of this description.

### BRIEF DESCRIPTION OF THE FIGURES

In the following, certain forms of implementation of the invention will be described for a better understanding of the invention by way of non-limiting example and with reference to the attached figures, in which
- Figure 1 is a perspective view of an industrial plant equipped with an optoelectronic safety device made according to the present invention, with parts removed for clarity;
- figure 2 is a perspective view of the optoelectronic safety device shown in figure 1, with parts removed for clarity;
- Figure 3 schematically illustrates the architecture of the optoelectronic safety device shown in Figure 1, with parts removed for clarity;
- Figures 4 to 13 schematically illustrate some steps in the operation of the optoelectronic safety device shown in Figure 1, and

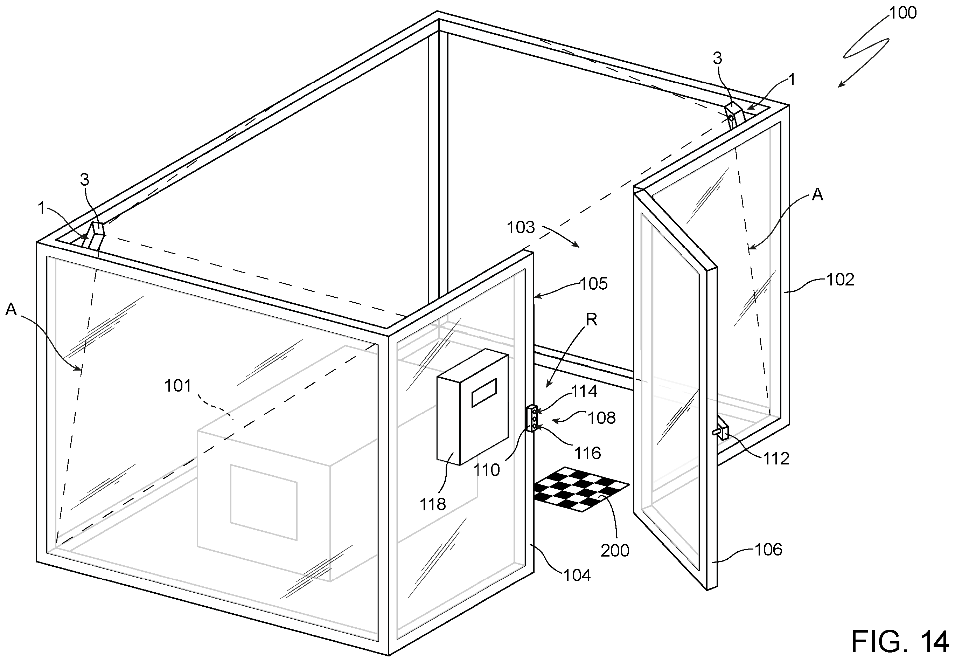

- Figure 14 is a perspective view of an alternative construction form of the plant shown in figure 1, with parts removed for clarity.

### EMBODIMENTS OF THE INVENTION

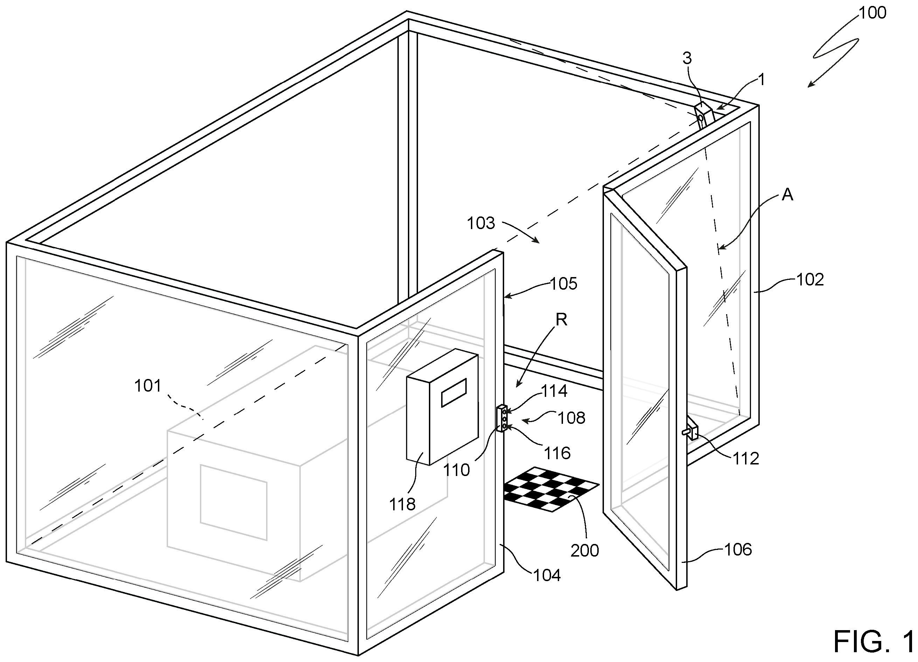

Referring to the example illustrated in Figure 1, the number 100 denotes an industrial machine or installation comprising a machine 101, such as a manipulator robot, textile machine, milling machine, lathe and/or other similar machine.

In addition, the system 100 preferably also comprises a security perimeter that at least partially surrounds the machine 101 and is intended to prevent unauthorized access to the machine 1. For example, the security perimeter may comprise a mechanical protective barrier.

More specifically, with reference to figure 1, the safety perimeter preferably comprises a protective barrier 102, which surrounds the machine 101 and is equipped with an opening 103 to allow safe access to the machine 101.

Preferably, but not necessarily, the opening 103 is configured as an emergency door and comprises a fixed part 104 or frame integral with the protective barrier 102 and shaped to delimit an access opening 105 to the machine 101, and a movable part 106 or leaf/door movably supported by the fixed part 104 between an open position in which it provides access to the machine 101, and a closed position in which it obstructs the access opening 105.

In addition, the system 100 preferably comprises an access control device adapted to perform an access control function through the gate 103, i.e. adapted to detect and/or prevent access through said gate 103 within the security perimeter.

The access control device may include equipment to detect the crossing of said gate 103 such as, for example, a laser barrier.

Or, in the case where the opening 103 is configured as a security door, the access control device may comprise an electronically operated security locking device 108 adapted to be positioned on the security door 103 and configured to lock, on command, the security door 103 in the closed position.

Preferably, the apparatus 108 is further configured to allow operation of the machine 101 only when it does not detect and/or prevent access through said opening 103 within the security perimeter, and conversely is configured to inhibit operation of the machine 101 when it detects and/or allows access through said opening 103 within the security perimeter.

The apparatus 108 is also configured to transmit a safety signal at least when it enables the operation of the machine 101.

For example, in the case where the opening 103 is configured as a security door, the device 108 is also configured to allow the operation of the machine 101 only when the security door is closed and locked, and vice versa it is configured to inhibit the operation of the machine 101 when the security door is open and/or unlocked.

With reference to the non-limiting example illustrated in Figure 1, the apparatus 108 preferably comprises a safety switch 110 adapted to be positioned on the fixed part 104 of the safety door 103.

In addition, the apparatus 108 preferably comprises an actuator 112 adapted to be positioned on the movable part 106 of the safety door 103 and cooperate with the switch 110 when the movable part 106 is arranged in the closed position, to lock the safety door 103.

In particular, the switch 110 is adapted to hold, on command, the actuator 112 to lock the safety door 103 in the closed position. For example, the switch 110 may include a locking mechanism adapted to lock, on command, the actuator 112 in contact with the same switch 110 to prevent the safety door 103 from opening.

The locking mechanism of the switch 110 may alternatively assume a locking configuration in which it locks the actuator 112 against the switch 110 and an unlocking configuration in which it allows the actuator 112 to move away from the switch 110.

In addition, the apparatus 108 may comprise sensor means 114 configured to determine when the safety door 103 is closed and/or locked.

The sensor means 114 may comprise, for example, a proximity sensor configured to determine whether the actuator 112 is in proximity and/or in contact with the switch 110.

Additionally or alternatively, sensor means 114 may include a position sensor (not visible in the figures) associated with the locking mechanism, if present, and configured to determine when the locking mechanism is in the locking configuration.

The apparatus 108 may further comprise switching means 116 electrically connected to the sensor means 114 and configured to provide the safety signal based on the data/signals acquired by the sensor means 114.

It should be noted that here and hereafter 'electrically' also means 'electronically'.

In addition, the apparatus 108 may comprise an electronic control unit (not shown) connected to the sensor means 114 and switching means 116 and configured to drive the switching means 116 based on data/signals provided by the sensor means 114.

In more detail, the switching means 116 may alternatively assume an active state in which they provide an electrical or electronic signal to signal that the actuator 112 is in contact and/or locked against the switch 110 and a passive state in which they provide no signal, or provide an electrical or electronic signal to signal that the actuator 112 is not in contact and/or locked against the switch 110.

The electronic control unit can be configured to bring the switching means 116 from the passive state to the active state when the sensor means 114 detect that the safety door 103 is closed and/or locked.

Conversely, the electronic control unit can be configured to bring or maintain the switching means 116 in the passive state when the sensor means 114 detect that the safety door 103 is open and/or unlocked.

Preferably, switching means 116 may comprise a pair of secure electronic outputs of the OSSD (Output Signal Switching Device) type driven by the electronic control unit.

By way of example only, a safe output in the active state provides a signal and assumes a logical state of '1' or 'ON' while in the passive state it provides no signal and assumes a logical state of '0' or 'OFF'.

Alternatively, or in addition, the switching means 116 can be driven by the electronic control unit to generate digital signals, i.e. bit sequences, encoding a telegram according to a communication protocol. The communication protocol may be of a known type such as, for example, IO-Link, Profinet, EtherCAT, EtherNet/IP, IO-Link Safety, Profisafe, CIP Safety, Safety over EtherCAT (FSoE), etc., or any other comparable communication protocol. In this case, certain bits of the telegram encode information relating to the condition detected by the sensor means 114. Preferably, the telegram also comprises validation bits (CRC, watchdog, consecutive numbers with respect to previously transmitted telegrams) configured to ensure the integrity of the telegram itself, generated as a function of the other bits of the telegram and/or as a function of previously transmitted telegrams.

By way of example, the switching means 116 may be electrically connected to an electronic control unit 118 controlling the system 100 that prevents the operation of the machine 101 when the safety door 103 is open and/or unlocked.

More specifically, the control unit 118 is adapted to control the operation of the machine 101 based on the safety signal provided by the switching means 116.

For example, control unit 118 can be configured to prevent operation of machine 101 when switching means 116 are in the passive state, and vice versa to allow operation of machine 101 when switching means 116 are in the active state.

Referring to the schematic example illustrated in Figure 1, the system 100 further comprises at least one optoelectronic safety device 1, which is adapted to monitor a predetermined monitoring area A. The machine 101 is positioned within the monitoring area A.

In other words, the monitoring area A preferably comprises the portion of the plant 100 in which the machine 101 is located and the portion of space in the vicinity of the machine 101, in particular surrounding/around the same machine 101.

More specifically, the monitoring area A preferably comprises the portion of the system 101 within the protective barrier 102 and including the machine 101.

In addition, device 1 is preferably adapted to be placed on protective barrier 102.

In particular, device 1 is preferably adapted to be placed in a fixed/stationary position, i.e. it is configured for a static application.

More specifically, device 1 is preferably adapted to be positioned above and beside machine 101, in order to monitor the area around machine 101 itself.

In addition, device 1 is separate and distinct from access control device 108.

As will be described in more detail below, in a possible form of realization, device 1 is configured to receive a monitoring activation signal when machine 101 is not operational, i.e. prior to its start-up.

In addition, device 1 is configured to monitor, for a predetermined interval of time, monitoring area A prior to the start-up of machine 101.

For example, the duration of the monitoring period can be between 2 seconds and 20 seconds.

Device 1 is also configured to prevent machine 101 from starting when it detects, in monitoring area A, a dangerous condition for an operator.

Conversely, device 1 is configured to allow the 101 machine to start only if a safe condition is determined during the monitoring period.

In this description and claims, a hazardous condition is defined as a condition in which, if the machine 101 were started, an operator could come into contact with a hazardous element of the machine 101.

More specifically, the hazardous condition occurs when there are objects, bodies or persons P (hereafter just 'persons' for brevity) moving in the monitoring area A.

In other words, the dangerous condition occurs when device 1 detects a movement of a person P in monitoring area A.

For example, the dangerous condition could occur if the safety door 103 were closed and locked by the machine 108 with a person P accidentally still present inside the protective barrier 102. In this case, in fact, the person P would be blocked inside the protective barrier 102 and if the machine 101 was started, the latter could come into contact with a dangerous element of the machine 101 such as, for example, a moving, high-pressure, high-temperature or similar organ.

Conversely, a safe condition means a condition in which a person P cannot come into contact with the machine 101 after its start-up.

More specifically, the safe condition occurs when there are no persons P moving in monitoring area A.

For example, the safe condition is obtained when the safety door 103 is closed and locked by the equipment 108 without persons P locked inside the protective barrier 102.

It should be noted that the term "moving" includes both macro-movements that can be made by a person in monitoring area A such as, for example, movement by walking, or a large movement of a limb, and micro-movements that can be made by a person who is essentially stationary at a point in monitoring area A such as, for example, body movements related to normal bodily functions such as chest movement given by breathing, minor limb movements necessary to maintain balance, myoclonus, or minor movements of anatomical projections such as fingers, hands or feet.

Preferably, the device 1 is configured to communicate with the machine 101 and/or the control unit 118 of the system 101. For example, the device 1 may be connected to the machine 101 and/or the control unit 118 via cable or via a wireless network. In addition, the device 1 is preferably configured to communicate with the access control device, for example via a wired connection or via a wireless network.

According to a possible embodiment of the invention, the device 1 is also configured to monitor the monitoring area A after the start of the access control function by said access control device and before the start of the machine 101. For example, the device 1 is configured to monitor the monitoring area A after the closing and locking of the security door 103 by the device 108 and before the start-up of the machine 101.

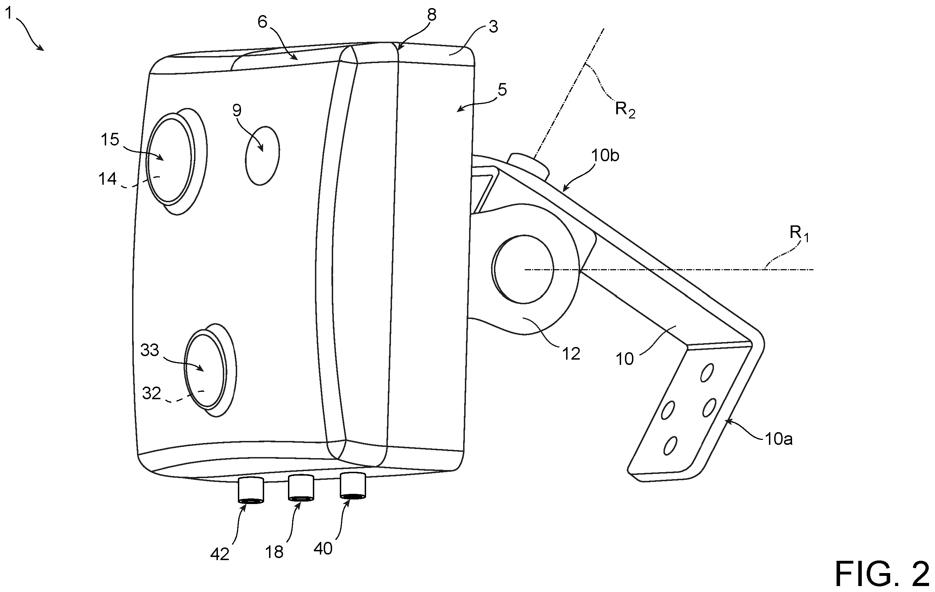

With reference to Figures 1 and 2, device 1 is configured to acquire images of monitoring area A during the monitoring period, and to determine the presence of moving persons P in monitoring area A on the basis of the acquired images.

Preferably, the access control device and the device 1 combine to form a safety system for the system 100 which allows the machine 101 to start only when access to the passageway 103 is controlled, and there are no persons P moving in the monitoring area A prior to the start of the machine 101.

For example, the safety locking device 108 and the device 1 combine to form a safety system for the system 100 that allows the machine 101 to start only when the safety door 103 is closed and locked, and there are no persons P moving in the monitoring area A prior to the start of the machine 101.

With reference to the example illustrated in Figures 1 and 2, device 1 comprises an external housing or enclosure 3, advantageously box-like in structure and configured to be positioned on protective barrier 102.

Preferably, casing 3 has an advantageously substantially parallelepiped shape and is internally hollow.

More specifically, the casing 3 preferably comprises a base 5 and a lid 6, which are complementary in shape and preferably cup-shaped.

Preferably, the base 5 and cover 6 are to be firmly coupled together at their perimeter edge.

In addition, the casing 3 preferably includes a gasket 8 adapted to be interposed between the base 5 and the cover 6, so as to substantially seal the casing 3.

Casing 3 may also be provided with a transpiration element or membrane 9 capable of preventing the accumulation of moisture within the enclosure 3 and allowing heat exchange between the interior of the enclosure 3 and the exterior environment.

With reference to Figure 2, the device 1 preferably includes an anchor bracket 10 for positioning the enclosure 3 on the protective barrier 102.

More in detail, the anchor bracket 10 preferably has an oblong shape. A first end 10a of the anchoring bracket 10 is adapted to be positioned on the protective barrier 102. A second end 10b, opposite the first end 10a, of the anchoring bracket 102 is adapted to be connected to the enclosure 3.

In addition, the device 1 preferably also comprises a joint 12 interposed between the anchor bracket 10 and the enclosure 3, to allow the orientation of the enclosure 3 with respect to the protective barrier 102 to be varied.

More in detail, the joint 12 is preferably a two-degree-of-freedom joint configured to allow rotation of the casing 3 relative to the anchor bracket 10 about two transverse rotation axes R₁and R₂, preferably orthogonal to each other.

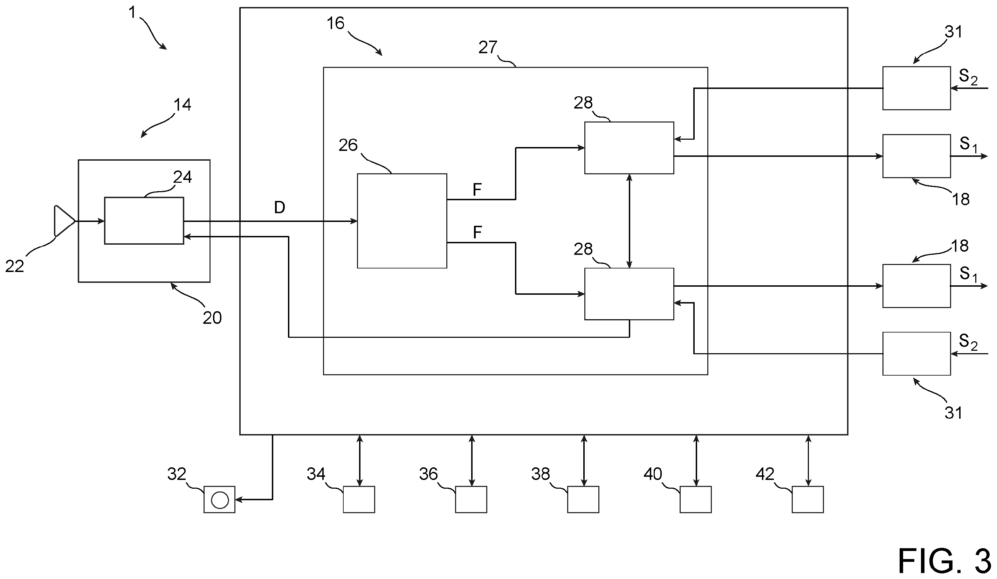

With reference to the example illustrated in Figures 2 and 3, furthermore, device 1 comprises imaging means or image capturing means 14 configured to acquire/capture images of monitoring area A.

The imaging means 14 are also configured to acquire images with a predetermined acquisition frequency, i.e. frame rate.

Preferably, the imaging means 14 are housed within the casing 3.

In more detail, casing 3 has a transparent or semi-transparent portion 15 positioned at the imaging means 14.

Additionally, the device 1 comprises an electronic control unit 16, which is in communication with the imaging means 14 and is configured to drive the imaging means 14 to acquire images of the monitoring area A and to determine the safe condition and/or the dangerous condition based on the images acquired by the imaging means 14.

More specifically, electronic control unit 16 is preferably configured to receive the monitoring activation signal when machine 101 is not operational.

In addition, the electronic control unit 16 is preferably configured to control, in response to the monitoring activation signal, the imaging means 14 to capture images of the monitoring area A for the monitoring period.

The electronic control unit 16 is also configured to process the images captured by the imaging means 14 to determine the dangerous or safe condition.

More specifically, the electronic control unit 16 is preferably configured to detect the movement of persons P within the monitoring area A from the difference between at least two different digital images D acquired during the monitoring period.

It is clear that the term digital images D acquired means both digital images directly acquired by imaging means 14 and pre-processing of them.

The electronic control unit 16 is further configured to prevent/inhibit the start of the machine 101 if a dangerous condition is determined, or vice versa to allow the start of the machine 101 if a safe condition is determined.

According to a possible embodiment of the invention, the electronic control unit 16 is configured to activate the imaging means 14 after the initiation of said access control function, for example after closing and locking the security door 103 via the apparatus 108.

Preferably, the electronic control unit 16 is housed inside the enclosure 3.

Referring to the example illustrated in Figure 3, the device 1 preferably comprises switching means 18 connected to the electronic control unit 16. Preferably, the switching means 18 are also configured to be connected to the control unit 118 of the system 101.

In addition, the switching means 18 are preferably configured to alternately assume an active state and a passive/inactive state distinguishable from each other. Preferably, in the active state the switching means 18 are configured to allow the start of the machine 101, while in the passive state they are configured to inhibit the start of the machine 101.

The electronic control unit 16 is preferably configured to drive the switching means 18 based on the images/data acquired by the imaging means 14.

More specifically, the electronic control unit 16 is preferably configured to normally drive the switching means 18 in the passive state.

In addition, the electronic control unit 16 is preferably configured to bring the switching means 18 from the passive state to the active state when the safety condition is determined.

Conversely, the electronic control unit 16 is preferably configured to bring or keep the switching means 18 in the passive state when the hazardous condition is determined.

Preferably, the switching means 18 are configured to securely provide the control unit 118 with a safety signal S₁to allow or prevent the machine 101 from starting.

By way of example, if the safety signal S₁indicates that the electronic control unit 16 has determined the safe condition, the control unit 118 allows the machine 101 to start. Conversely, if the safety signal S₁indicates that the electronic control unit 16 has determined the dangerous condition, the control unit 118 does not allow the machine 101 to start.

Preferably, the switching means 18 comprise an electrical communication interface adapted to be connected to the control unit 118 to provide the safety signal S₁to the latter.

According to one possible form of realization, the switching means 18 comprise a pair of secure electronic outputs of the OSSD (Output Signal Switching Device) type.

Alternatively, or in addition, the switching means 18 may be driven by the electronic control unit 16 to generate digital signals, i.e. bit sequences, encoding a telegram according to a communication protocol, for example according to one of the communication protocols already mentioned and not repeated for the sake of brevity. In this case, certain bits of the telegram encode information relating to the safety condition or the dangerous condition determined by the electronic control unit 16.

With reference to the example illustrated in Figure 3, the imaging means 14 preferably comprise an optoelectronic imaging device 20, in particular a camera.

More specifically, advantageously, imaging means 14 preferably comprise only a single optoelectronic imaging device 20.

In particular, the optoelectronic image capture apparatus 20 preferably comprises only one camera, and more conveniently only one two-dimensional camera.

In addition, the imaging means 14 do not include any opto-electronic imaging equipment other than the apparatus 20.

In addition, the device 1 is preferably devoid of additional sensors capable of determining the presence of moving persons in the vicinity of the machine 101. In particular, the device 1 is preferably devoid of detection devices based on RADAR technology, laser scanners and/or the like.

By way of example, the optoelectronic imaging apparatus 20 may comprise an optic or lens 22 capable of directing light towards an optoelectronic sensor 24 capable of converting the received light into a digital image or digital image signal. For example, the optoelectronic sensor 24 may be a CMOS (Complementary Metal Oxide Semiconductor) type sensor.

In use, the image acquisition means 14 are capable of providing the electronic control unit 16 with a digital image D or a digital image signal encoding the acquired image.

Preferably, the digital image D comprises a numerical array of points or pixels representative of the image acquired by the imaging means 14.

In addition, the digital image D is preferably obtained from a single optoelectronic imaging device 20 and is therefore two-dimensional.

More specifically, the digital image D is preferably referenced to the reference plane/system of the same optoelectronic imaging device 20.

Referring to the example illustrated in Figure 3, the electronic control unit 16 preferably comprises an image processing unit 26, hereinafter also referred to as IPU 26 (Image Processing Unit), which is configured to receive digital images D from the imaging means 14.

Preferably, IPU 26 is connected to the imaging means 14.

In use, IPU 26 is preferably configured to control the imaging means 14 to capture images of monitoring area A for the monitoring period.

In accordance with an aspect of the present invention, the IPU 26 is preferably further configured to correct the distortion introduced by the optics 22 on the digital image D, i.e. to perform the so-called "fisheye" correction, in a manner known per se and therefore not further described for the sake of brevity. In addition, the IPU 26 is preferably configured to perform a transformation of the digital image D, in order to obtain, from the digital image D, a new transformed digital image D referred to a predetermined reference plane R.

In more detail, the IPU 26 is preferably configured to be able to perform a projective or homographic transformation of the digital image D, such that the transformed digital image D relative to a predetermined reference plane R is obtained from the digital image D. For example, the reference plane R may comprise or coincide with the surface or floor on which the machine 101 rests. Preferably, the IPU 26 is provided with a memory configured to store the transformation matrix or homographic matrix for transforming the digital image D into the transformed digital image D relative to the reference plane R.

According to one aspect of the invention, the IPU 26 is preferably configured to determine/calculate the transformation matrix from the target-image of a positioning or calibration target 200 adapted to be positioned on the reference plane R.

More specifically, imaging means 14 are preferably configured to acquire target images of the positioning or calibration target 200 to be placed on the R reference plane.

The positioning target 200 may comprise, for example, a panel superficially provided with a predetermined graphic feature. Alternatively or additionally, the positioning target 200 may comprise a predetermined graphic feature projected or drawn on the reference plane R.

The IPU 26 is preferably configured to be able to determine the position and/or orientation of the positioning target 200 with respect to the device 1 based on the target-image.

In addition, on the basis of the positioning target image-target 200, the IPU 26 is preferably configured to calculate/determine the homographic transformation matrix for performing the transformation of the digital image D into the transformed digital image D relative to the reference plane R.

As explained below, the IPU 26 is preferably configured to perform, on command, the calculation of the transformation matrix during the initial calibration phase of the device 1 following its positioning on the protective barrier 102 of the system 100.

Preferably, IPU 26 is also configured to combine/multiply the transformation matrix with the digital image D, so as to obtain the transformed digital image D relative to the reference plane R.

In use, this allows the digital image D acquired with respect to the reference system of device 1 to be transformed into the new transformed digital image D represented with respect to the reference plane R and/or machine 101.

The technical effect of this transformation relates to the possibility of eliminating distortions in the digital image D due to the offset position of device 1 with respect to the reference plane R on which machine 101 lies.

Since the imaging means 14 are equipped with a single optoelectronic imaging device 20, in fact, the acquired digital image D is two-dimensional, and the dimensions of persons P represented in the digital image D and placed on the reference plane R are influenced by the distance between the person and the device 20. Therefore, persons P of the same size are represented in the digital image D with different dimensions depending on their distance from the device 20.

As will be made clear later, this would prevent the setting of tolerance thresholds to discriminate the movement of people in monitoring area A.

The transformation of the digital image D into the transformed digital image D referring to the reference plane R, on the other hand, makes it possible to normalize the dimensions of the persons P represented in the transformed digital image D with respect to the reference plane R. Therefore, persons P of the same dimensions and lying on the reference plane R at different distances from the apparatus 20 will be represented in the transformed digital image D with the same dimensions with respect to the reference plane R.

For the sake of brevity, the term "transformed" will be omitted in the following discussion and more generic reference will be made to digital image D. It is understood that the term digital image D can be understood to mean either the digital image D acquired by the image acquisition means 20, or the transformed digital image D processed by the IPU 26.

In addition, IPU 26 is preferably configured to carry out pre-processing of filtering and saturation of the digital D image in a manner known in itself and therefore not further described for the sake of brevity.

This pre-processing of filtering and saturation can be performed on the acquired D digital image or the transformed D digital image.

According to an aspect of the present invention, the IPU 26 is preferably also configured to rectify the digital image D, so as to obtain a digital image with constant resolution, in particular with respect to the parts of the persons P represented in the digital image D lying on the reference plane R.

More in detail, the IPU 26 is preferably configured to rectify the digital image D by means of decimation and/or interpolation techniques per se known in the field of image processing, so as to obtain a digital image with constant resolution with respect to the reference plane R.

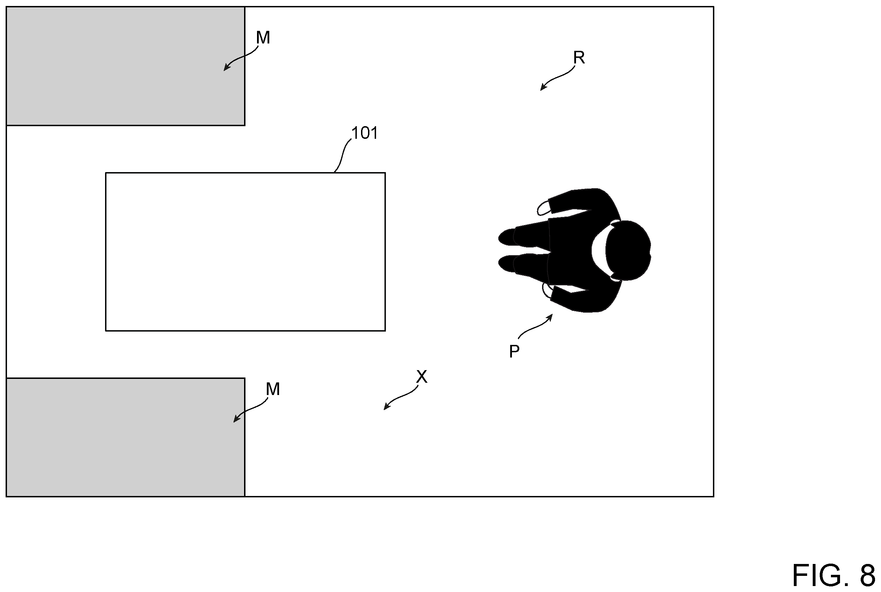

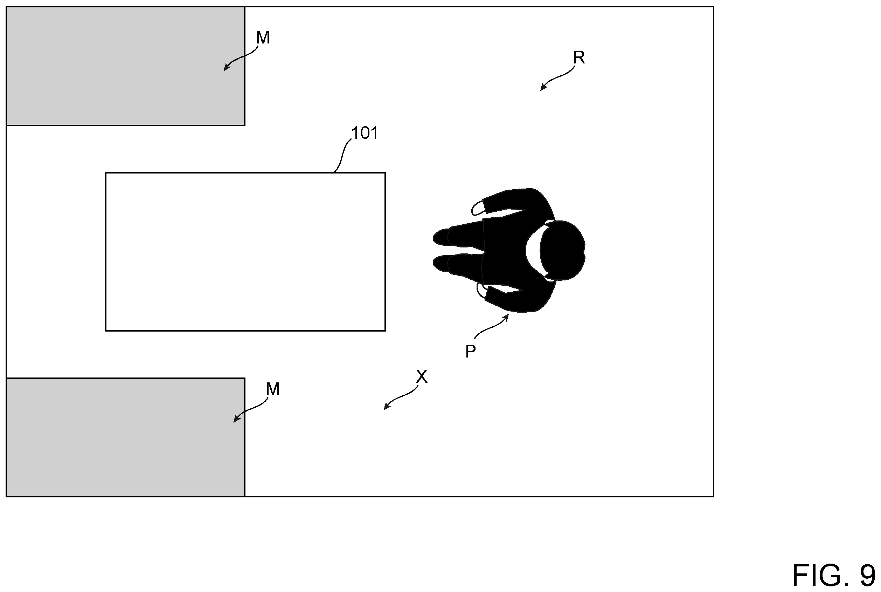

According to a further aspect of the present invention schematically illustrated in Figures 8, 9 and 10, the IPU 26 is preferably configured in such a way that it is possible to define, in the digital image D, areas or portions of masking M to be ignored/excluded in the subsequent calculation operations for determining the hazardous condition.

In other words, IPU 26 is preferably configured to be able to subdivide the digital image D into areas or portions of interest X, which will subsequently be processed for the determination of the hazardous condition, and into masking areas M, which will be disregarded during the determination of the hazardous condition.

For example, the masking areas M may comprise or correspond to portions of the digital image D relating to the walls of the protective barrier 102, to parts of the installation 101 external to the protective barrier 102, to the machine 101 and/or parts thereof, to pulsating light sources in the installation 100 and/or the like.

In other words, the masking areas M may comprise portions of the digital image D relating to areas of the system 1 in which movements of persons or objects not associated with the hazardous condition may be detected, such as persons moving outside the protective barrier 102.

The IPU 26 is preferably configured to process the data/pixels contained in the areas of interest X of the digital image D. In other words, the IPU 26 is preferably configured to neglect the data/pixels contained in the masking areas M of the digital image D.

In addition, IPU 26 is preferably configured to process digital images D to determine the value of one or more image characteristics/parameters/properties F of previously acquired digital images D.

For example, IPU 26 may be configured to determine values associated with image characteristics F such as values associated with color such as mean color or greyscale value, maximum color or greyscale value, brightness, color centroid, color centre of gravity and/or other similar parameters of the digital image D and/or portions thereof.

More specifically, IPU 26 is preferably configured to determine/calculate the value of one or more image features/parameters F by processing only the data/pixels contained in the areas of interest X of digital images D.

With reference to the example illustrated in Figure 3, the electronic control unit 16 preferably further comprises a pair of safety processing units 28, hereinafter also referred to as SPU 28 (Safety Processing Unit), which are both configured to receive from the latter the values of the previously processed image characteristic(s) F.

In addition, the SPU 28 is also preferably configured to determine the dangerous or safe condition based on the F-image characteristics received from IPU 26.

More specifically, the two SPUs 28 are preferably configured to determine the hazardous condition or the safe condition based on the image characteristics F received from IPU 26 one independently of the other.

The fact that the SPU 28 determines the danger condition on the basis of the image characteristics F, and not directly on the basis of the digital images D, makes it possible to considerably reduce the computing power required by the SPU 28. The latter, in fact, are not involved in the processing of digital images D but merely compare the numerical values of the image characteristics F processed by IPU 26, as will be detailed below.

Preferably, the two SPUs 28 are also connected to the switching means 18 and are configured to drive these according to the determined danger or safety condition.

More specifically, each of the two SPU 28s is preferably connected to a relative safe output of device 1 and is configured to drive it according to the condition determined by SPU 28 itself.

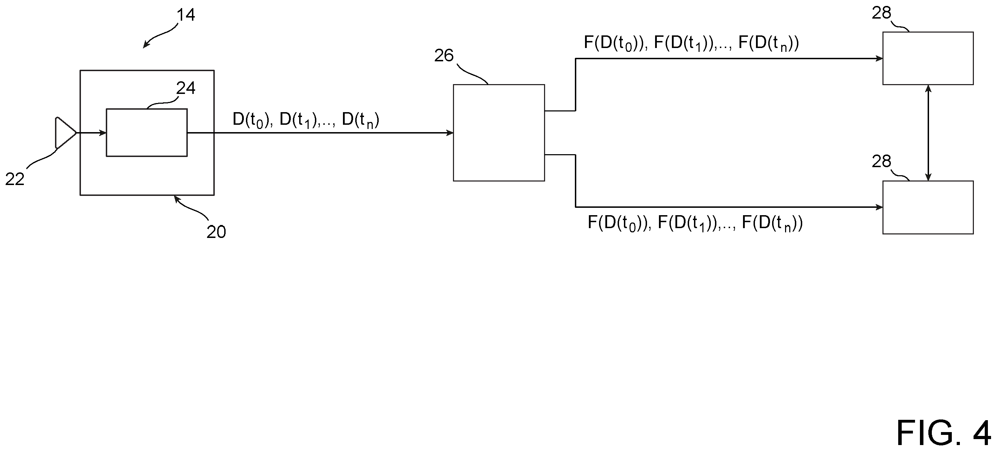

With reference to a possible non-limiting embodiment schematically illustrated in Figure 4, the IPU 26 may be configured to provide the values of the same image characteristic(s) F to both SPUs 28. More specifically, the IPU 28 may be configured to provide the two SPUs 28 with values of the same image characteristic(s) F processed from the same digital images D.

In other words, in the form of the realization of figure 4, packets of image features F relating to a respective previously acquired digital image D are preferably transmitted from IPU 26 to the two SPUs 28.

For example, both SPUs 28 could receive from IPU 26 the values of the color centre of gravity or other image characteristics F obtained from the same digital images D.

In addition, each of the two SPU 28s is preferably configured to compare/contrast the values of the image characteristics F relative to two different digital images D acquired at two different time instants, and to determine whether the difference between these values exceeds a pre-determined safety threshold.

If the difference between the values of the image characteristics F for the two different digital images D exceeds this safety threshold, this indicates that the two digital images D are different from each other and therefore movement of a person P has been detected in monitoring area A.

On the other hand, if the difference between the values of the image characteristics F relating to the two different digital images D is less than this safety threshold, this indicates that the two digital images D are essentially equal to each other and therefore no movement of a person P was detected in monitoring area A.

For example, the safety threshold can be set in such a way that it can discriminate/detect movements/movements of persons P involving an area with a minimum width greater than a predetermined minimum value of, for example, between 1 and 10 square centimeters.

According to a possible form of implementation, the two SPU 28s could be configured to compare/contrast the image characteristics F obtained from two digital images D acquired at two temporally consecutive instants of acquisition, i.e. from two successive frames.

It is understood that each of the two SPU 28s could also be configured to compare/contrast the image characteristics F relative to two digital images D captured at two non-consecutive instants of acquisition.

In use, the IPU 26 may be configured to provide the SPUs 28 with image characteristics F relative to the digital images D during the monitoring period in an advantageously continuous manner. The two SPUs 28, on the other hand, are preferably configured to continuously compare the image characteristics F relative to two digital images D, during the monitoring period, at two different time instants from each other.

If the difference between the values of the image characteristics F compared by at least one of the two SPUs 28 exceeds said safety threshold, the latter is configured to determine the dangerous condition, and preferably to drive or maintain the switching means 18, in particular the relevant safe output, in the passive state.

Vice versa, if during the monitoring period the difference between the values of the image characteristics F compared by SPU 28 remains below the safety threshold, the latter is configured to determine the safe condition and preferably to drive the switching means 18, in particular the relevant safe output, into the active state.

Preferably, the IPU 26 and the two SPUs 28 are part of the same data processing board 27.

According to an aspect of the present invention, the control unit 16, in particular the two SPUs 28, is preferably configured to supervise/control the operation of the imaging means 14, so that malfunctions can be detected.

Preferably, the control unit 16 can be configured to perform a diagnostic procedure to determine any malfunctioning of the imaging means 14.

In particular, the control unit 16 is preferably configured to alter the operation of the image capturing means 14 at an instant of time t, with the aim of producing an expected acquisition at the instant of time t by the image capturing means 14 and comparing whether the actual acquisition at the instant of time t by the image capturing means 14 corresponds with the expected acquisition.

For example, the control unit 16 can be configured to carry out a diagnostic procedure that involves switching off the imaging means 14 for a predetermined time interval, and checking their response to determine any malfunctions.

If, during this diagnostic procedure, the electronic control unit 16 does not receive digital images D at the switching off of the imaging means 14 and receives digital images D again after the imaging means 14 have been restarted, the electronic control unit 16 determines a malfunction of the imaging means 14. Otherwise, the electronic control unit 16 determines a malfunction of the imaging means 14 and brings or keeps the switching means 18 in the passive state.

Even more in detail, during such a diagnostic procedure, the SPUs 28 are preferably configured to switch off the image acquisition means 14. Preferably, the IPU 26 is configured to provide an error signal to the SPUs 28 associated with the absence of images provided by the image acquisition means 14. Preferably, the SPUs 28 are then configured to determine the correct operation of the image acquisition means 14 when they receive the error signal from the SPU 26 at the switch-off of the image acquisition means 14.

The electronic control unit 16 is configured to bring or maintain the switching means 18 in the passive state if it determines a malfunction of said imaging means 14 to inhibit machine start-up 101.

The technical effect related to the performance of such a diagnostic test is related to the possibility of being able to use a single optoelectronic image acquisition device 20, in particular a single camera, also in a safety device for the functional safety of the system 101. In particular, the possibility of determining in real time possible malfunctions of the image acquisition means 14 makes it possible to avoid having to use at least two cameras redundant with each other without jeopardizing the security level of the device 1. In particular, also thanks to this diagnostic procedure, the device 1 is able to reach a functional safety level or SIL (Safety Integrity Level) 3 according to the IEC 61508:2010 standard even with a single optoelectronic image acquisition device 20, in particular with a single camera, with the obvious advantages that follow.

According to a further aspect of the present invention, the electronic control unit 16 is preferably configured to determine whether the device 1 has been tampered with with respect to its initial installation configuration and/or to determine any environmental conditions affecting its operation.

In addition, the electronic control unit 16 is preferably configured to determine any acquisition conditions, such as, for example, fog, smoke, water or ice on the enclosure 3, too high or too low brightness, the presence of objects interposed between the device 1 and the monitoring area and/or the like, which impair the proper functioning of the device 1, and, if necessary, to keep the switching means 18 in the passive state.

For example, in a possible non-limiting embodiment, the electronic control unit 16 may be configured to determine the noise level present in the digital images D acquired by the imaging means 14. If the noise level is below a predetermined minimum value, the electronic control unit 16 determines tampering of the device 1, for example due to shielding of the imaging means 14, and keeps the switching means 18 in the passive state. In addition, the electronic control unit 16 may be configured to acquire and store digital reference images D of the monitoring area.

In use, the electronic control unit 16 can also be configured to compare the digital images D acquired with the reference digital images acquired during the initial installation phase, in order to determine changes in installation or environmental conditions that affect the correct functioning of the device 1, and, if necessary, to maintain the switching means 18 in the passive state.

With reference to the example shown in figure 3, device 1 can also be configured to be connected in series with further devices 1.

In more detail, the device 1 may comprise at least one pair of secure inputs 31, which are connected to the electronic control unit 16 of the device 1 and are adapted to be connected to the respective secure outputs of the further device 1.

Preferably, each secure input 31 is adapted to be connected to a related SPU 28, in order to provide input to the latter with the signal output from the related secure output of the further device 1.

Each SPU 28, in turn, is preferably configured to drive the relevant switching means 18 in the active state only if the logical state of the signal provided by the relevant safe input 31 is also "ON" or "1", indicative of the fact that the further device 1 has also determined the safe condition. Otherwise, the SPU 28 is preferably configured to drive the relevant switching means 18 in the passive state.

Referring to the example illustrated in Figure 3, the device 1 preferably also comprises a light source 32, which is electrically connected to the electronic control unit 16 and is configured to output a light signal based on, for example, the state of the switching means 18.

In particular, the light source 32 may include an LED (Light Emitting Diode), especially an RGB LED.

The electronic control unit 16 can be configured to control the light source 32 to output a light signal of a first color when the switching means 18 are in the active state and a second light signal when the switching means 18 are in the passive state.

With reference to Figure 2, the housing 3 is preferably provided with a transparent or semi-transparent portion 33 positioned at the light source 32, so that the light signal emitted by the latter can be viewed by an operator.

With reference to the example illustrated in Figure 3, device 1 preferably also includes an acceleration sensor or inertial sensor 34, which is electrically connected to the electronic control unit 16.

Preferably, acceleration sensor 34 is a triaxial accelerometer.

On the basis of the signals provided by the acceleration sensor 34, the electronic control unit 16 is preferably configured to determine the vibrations of the device 1 and to bring or maintain the switching means 18 in the passive state if these vibrations exceed a predetermined tolerance threshold.

In addition, device 1 preferably also includes a temperature sensor 36, which is electrically connected to the electronic control unit 16.

On the basis of the signals provided by the temperature sensor 36, the electronic control unit 16 is preferably configured to determine the temperature at the device 1 and to bring or maintain the switching means 18 in the passive state this temperature is outside a predetermined range.

Referring to the example illustrated in Figure 3, the device 1 also comprises storage means 38, which are electrically connected to the electronic control unit and are configured to store images/data captured by the imaging means 14 and/or data relating to the operation of the device 1 itself.

More specifically, storage means 38 may include a removable electronic memory card and/or similar.

Preferably, device 1 also includes a power port 40 configured to be connected to a power source to power the device itself.

With reference to Figure 3, the device 1 preferably also comprises a communication interface 42 for electrically connecting an electronic device separate from the device 1, for example a personal computer, tablet and/or the like, to the electronic control unit 16.

For example, communication interface 42 allows the electronic control unit 16 to be connected to a computer on which a program or GUI (Graphical User Interface) is installed that allows a user to configure the operation of the electronic control unit 16.

The operation of the optoelectronic safety device 1 and the associated system 100 described above according to the invention is as follows.

Once device 1 has been positioned in such a way that the field of view of the imaging means 14 includes the monitoring area A, operation of device 1 preferably includes an initial calibration procedure or set-up, to adjust the operating parameters of device 1 based on its installation position.

Preferably, the initial calibration procedure for device 1 comprises the following steps:
a) Place calibration target 200 on the reference plane,
b) control the imaging means 14 in such a way as to acquire an image-target of the calibration target 200, and
c) Calculate the transformation matrix, i.e. the projective or homographic matrix, to obtain the transformed digital image D referring to the reference plane R from the digital image D.

According to an aspect of the present invention, the initial calibration procedure preferably also includes the step of defining the masking areas M of the digital image D.

Preferably, the initial calibration procedure may include the step of changing further operating parameters of device 1, such as the duration of the monitoring period and/or the like.

It is understood that the initial calibration procedure described above does not need to be repeated each time device 1 is started up. For example, it may be sufficient to carry out this calibration procedure once after device 1 has been positioned and/or after the installation conditions of device 1 have changed.

In addition, instructions for carrying out the initial calibration procedure can be saved on a computer program, and the electronic control unit 16 can be configured to automatically execute these instructions on command.

The general operation of device 1, on the other hand, preferably involves activating device 1 to monitor monitoring area A for the monitoring period, and driving the switching means 18 of device 1 into the active state only if the safety condition is determined, to enable the operation of machine 101.

In addition, if the device 1 is associated with a system 100 also having a device 108 associated with the gate 103, the activation of the device 1 preferably takes place after the activation of the access control function via the gate 103 via the device 108.

More specifically, in an initial operating condition of the device 1, the electronic control unit 16 preferably brings or keeps the switching means 18 in the inactive state, so as to inhibit the operation of the machine 101.

In addition, the operation of device 1 involves the following steps:
d) receive an instruction to activate the imaging means 14;
e) activate imaging means 14 for the monitoring period, so that a plurality of digital D images of the monitoring area are acquired;
f) supply digital images D during the monitoring period to the electronic control unit 16;
g) Check the electronic control unit 16 to determine the dangerous condition based on the digital images D provided by the imaging means 14,
h) prevent machine 101 from starting up if a hazardous condition is determined; or vice versa
i) allow machine 101 to start if the hazardous condition is not determined.

For example, step d) may comprise receiving, once the security door 103 has been closed and locked via the apparatus 108, a signal from the same apparatus 108 and/or from the electronic control unit 118 of the system 100 capable of activating the imaging means 14 of the device 1.

Preferably, step (g) in turn comprises the step of calculating by means of the IPU 26 the values of the image characteristics F of the digital images D received from the imaging means 14.

More in detail, step g) preferably includes the step of correcting the distortion introduced by optics 22 on digital D images, i.e. to carry out 'fish-eye' correction.

Step g) also preferably involves transforming the digital image D relative to the reference plane R.

More in detail, step g) preferably involves determining the transformed digital image D relative to the reference plane R by multiplying/combining the digital image D by the projective or homographic matrix determined during the initial calibration step.

In addition, step g) preferably involves determining, on the basis of the masking areas defined during the initial calibration, the portions of interest of the digital image D to be processed to determine the values of the image characteristics F.

Step g) also preferably involves determining the values of the image characteristics F from the D-transformed digital images, supplying these values to the two SPU 28s, and checking the two SPU 28s to determine the difference between the values of the image characteristics F.

In addition, during step g), each SPU 28 determines whether or not the difference between the values of the image characteristics F exceeds the safety threshold, in order to determine the safe condition or the unsafe condition and to inhibit or not to start the machine 101.

The advantages associated with the optoelectronic safety device 1, its method of operation and the safety system comprising this device according to the present invention are obvious.

Firstly, the use of device 1 drastically increases the safety level of the installation 100, as it reduces the risk that the machine 101 can be started with people P accidentally stuck inside the protective barrier 102.

The possibility of being able to connect a plurality of devices 1 in series with each other also makes it possible to increase the level of safety even in large installations 100 or in installations 100 equipped with machinery 101 with complex geometries, because it avoids shadow zones within the protective barrier that are not monitored by devices 1.

In addition, the special architecture of Device 1 allows for reduced implementation costs, as it uses only one camera.

The use of calibration target 200 also greatly simplifies the initial calibration procedure for the user, who is only required to place calibration target 200 on the floor and start the calibration procedure.

In addition, the possibility of tracking M masking areas minimises the risk of false positives, as the operator can exclude from the monitoring area those areas within the device 1's field of view in which moving objects or persons might be present that are not associated with a real dangerous condition, such as an object swaying slightly, a person moving outside the safety perimeter and/or similar.

In addition, the initial set-up of device 1 is simple and can be carried out even by non-highly specialized personnel, as it simply involves placing calibration target 200 on reference plane 200 and providing a command to start the initial calibration procedure, without any further operator intervention.

In addition, during the calibration procedure, the operator can have immediate visual feedback of the images acquired by device 1 via the GUI.

Finally, the use of an IPU 26 and two separate and distinct SPU 28s makes it possible to optimize the performance of the individual electronic boards, and thus their cost, according to their actual use. The image processing operations, which require more computing power, are in fact entrusted solely to the IPU 26, which must be sized accordingly. SPU 28, on the other hand, performs the calculation operations to determine the safety condition on the basis of the image characteristics received from IPU 26, and less computing power is required.

Finally, it is clear that modifications and variants may be made to the optoelectronic safety device 1, its method of operation and the safety system comprising that device according to the present invention, which, however, do not go beyond the scope of protection defined by the claims.

For example, IPU 26 can be configured to provide the two SPU 28 with different F image characteristic values.

In particular, IPU 26 can be configured to provide the values of a first image characteristic F₁, e.g. color centre of gravity, to the first SPU 28 and the values of a second image characteristic F₂, e.g. greyscale, to the second SPU 28.

Each SPU 28, in turn, can be configured to compare the values of the relative image characteristics F₁and F₂received, to determine the safe condition of one independently of the other.

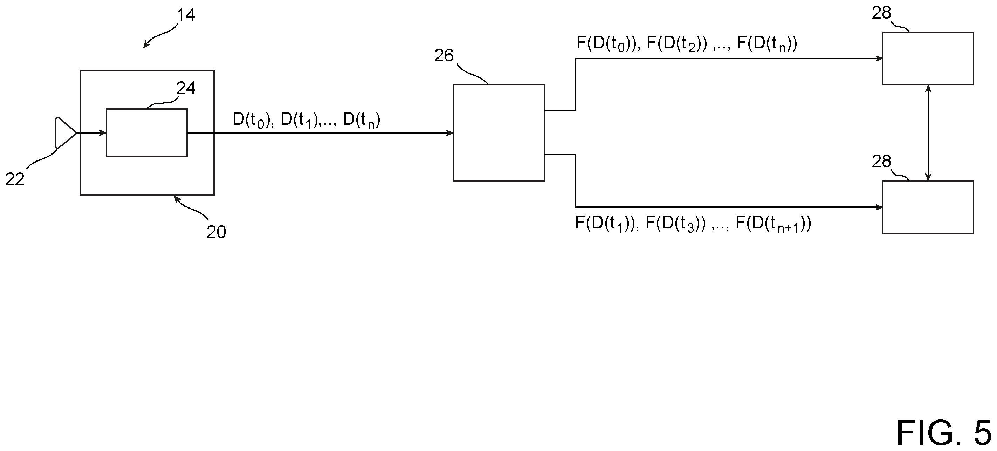

In addition, with reference to the schematic example illustrated in Figure 5, IPU 26 could also be configured to provide the two SPUs 28 with image characteristic values F obtained from digital images D acquired at different time instants.

By way of example only, IPU 26 could be configured to provide the first SPU 28 with image characteristic values F calculated from digital images D acquired at instants of acquisition tₙ, and to provide the second SPU 28 with image characteristic values F calculated from digital images D acquired at instants of acquisition t₍ₙ₊₁) , wherein t₍ₙ) and tₙ₊₁correspond to different instants of acquisition.

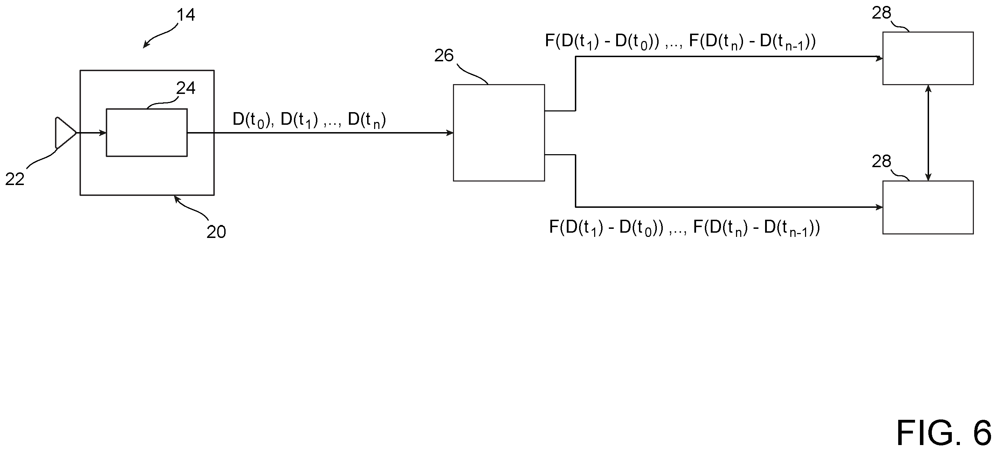

In addition, with reference to a further variant embodiment schematically illustrated in Figures 6 to 10, the IPU 26 could be configured to calculate the difference Q between two or more previously acquired digital images D, and to provide the SPU 28 with image characteristic values F calculated from the difference Q between two or more digital images D.

In particular, with reference to the example illustrated in Figure 6, IPU 26 could be configured to calculate the difference Q between two digital images D acquired at two consecutive instants of acquisition t_{(n) (-1)}and tₙ between them, and to provide both SPUs 28 with feature values calculated from the difference between the latter two digital images D.

Figures 8, 9 and 10, for example, respectively schematically show a digital image D of a person P acquired at an instant t_{(n) (-1)}, a digital image D of a person P acquired at a later instant tₙ, at which the person performed a movement, e.g. of one step, and the calculated difference Q between two digital images D acquired at the two instants tₙ and tₙ₋₁.

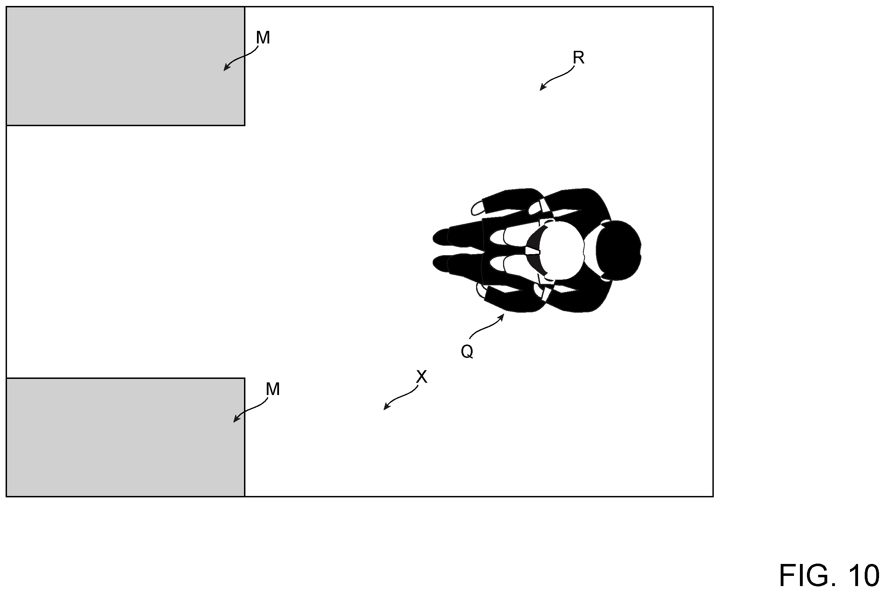

For the sake of clarity, in Figure 10, the difference Q has been represented in negative so that it can be clearly understood. In other words, in Figure 10, the parts corresponding to difference Q have been represented in inverted colors compared to the colors used for the respective parts of person P in pictures 8 and 9.

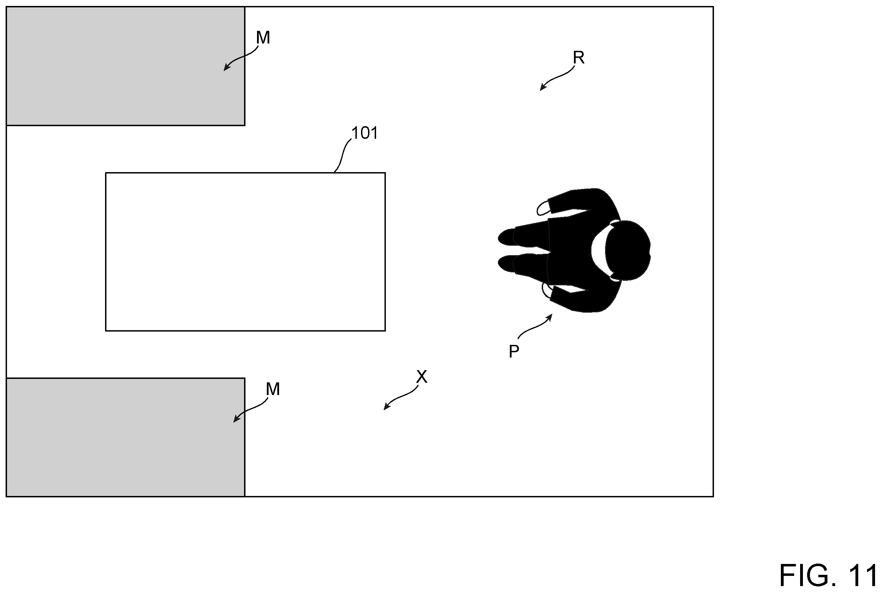

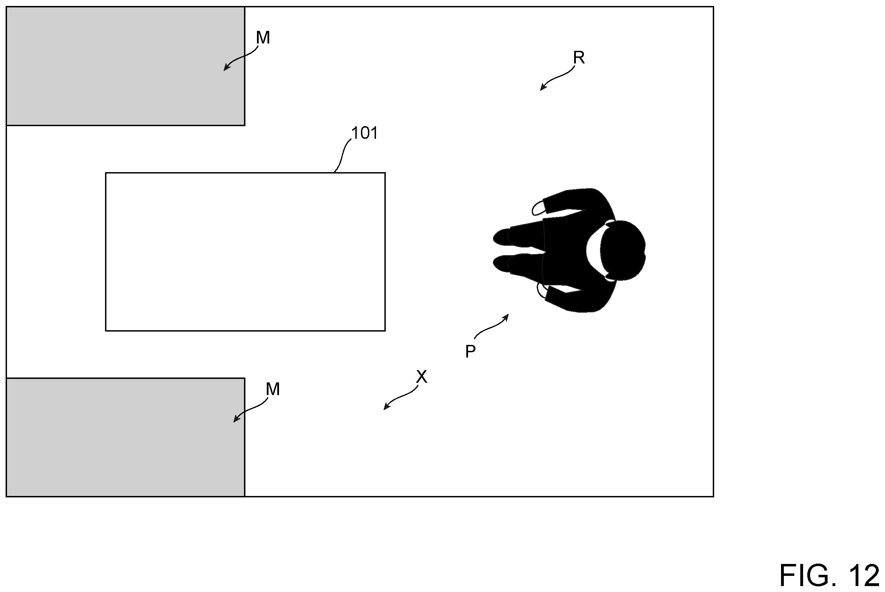

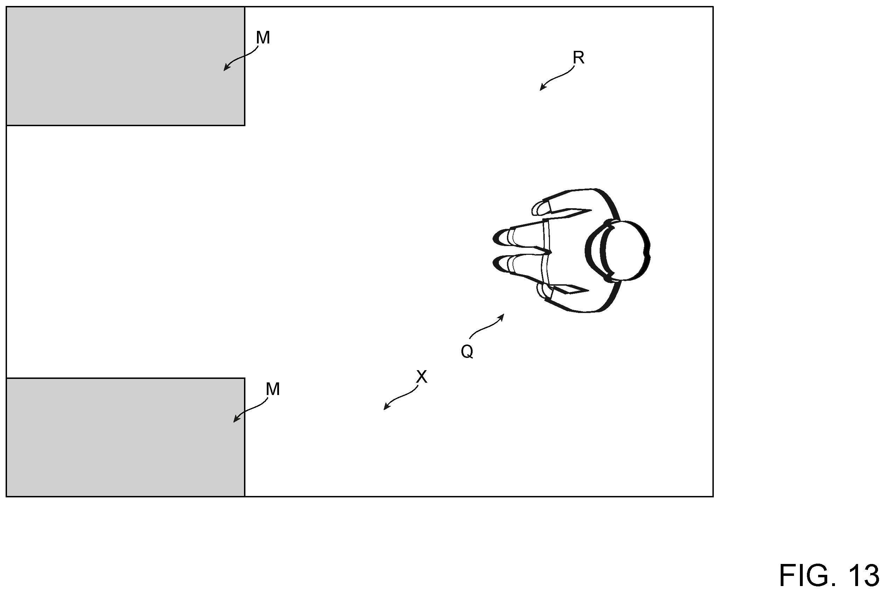

Figures 11, 12 and 13 respectively show two digital images D acquired at two different instants tₙ₋₁ and tₙ and their difference Q, where, however, the displacement of the person P between the two different images is smaller than in the example shown in Figures 8-10. For example, the displacement shown in Figures 11, 12 and 13 may be less than the safety threshold.

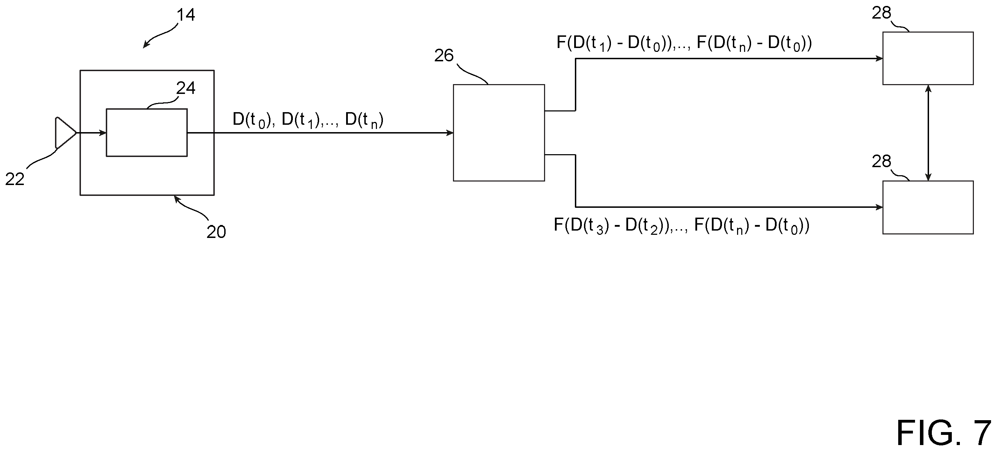

In addition, with reference to the example illustrated in Figure 7, the IPU 26 could be configured to calculate a first difference Q₁between two digital images D acquired in two first instants of acquisition and to provide the values of the image characteristics F calculated from said difference Q₁to a first SPU 28. Additionally, the IPU 26 could be configured to calculate a second difference Q₂between two digital images D acquired at two second instants of acquisition and to provide image characteristic values F calculated from said difference Q₂to the second SPU 28, wherein the second instants of acquisition differ from the first instants of acquisition.

With reference to the example illustrated in Figure 11, moreover, the safety system of plant 100 could comprise a plurality of opto-electronic safety devices 1 connected in series with each other.

In addition, the initial calibration procedure of device 1 could include alternative methods to calculate the homographic or projective transformation matrix.

For example, instead of using the calibration target 200 placed on the reference plane R, the electronic control unit 16 could be configured to receive, for example from an operator, the coordinates of the position where the device 1 was installed with respect to the reference plane R, and could be configured to calculate this transformation matrix on the basis of the coordinates indicated by the operator.

In addition or alternatively, the electronic control unit 16 could be configured to determine at least part of the coordinates of the position in which the device 1 was installed, for example its orientation with respect to the reference plane R, on the basis of data provided by the acceleration sensor 34.

According to a further embodiment, the optoelectronic safety device 1 comprises:
- imaging means 14 configured to capture digital images D of said monitoring area A, and
- an electronic control unit 16, which is configured for:
   ∘ drive said imaging means 14 in such a way as to capture said digital images D,
   ∘ process said digital images D to determine a dangerous condition when movement associated with the presence of persons P and/or objects within said monitoring area A is determined during a monitoring period,
   ∘ prevent the start-up of said machine 101 if said hazardous condition is determined, or vice versa
   ∘ allow that machine to start up 101 if no such hazardous condition is determined.

According to a further embodiment, wherein said electronic control unit 16 is configured for:
∘ receive a monitoring activation signal when said machine 101 is not operational,
∘ control, in response to said monitoring activation signal, said imaging means 14 in such a way as to capture said digital images D for said monitoring period.

According to a further embodiment, wherein said electronic control unit 16 is configured to detect movement of persons P and/or objects within said monitoring area A from the difference between at least two digital images D.

According to a further embodiment, said electronic control unit 16 is configured to detect the movement of persons P and/or objects within said monitoring area A from the difference between image characteristics F obtained from at least two different digital images D and/or from the difference between image characteristics F obtained from the difference between two different digital images D.

According to a further embodiment, said electronic control unit 16 comprises an image processing unit 26, which is connected to said image acquisition means 14 and is configured to process said digital images D so as to calculate the value of one or more image characteristics F of said digital images D.

According to a further embodiment, wherein said image characteristics F comprise at least one of: the color or greyscale value, the average color or greyscale value, the maximum color or greyscale value, the brightness, the centroid of the color or greyscale,
wherein said image characteristics F are calculated from said digital image D or from one or more portions of said digital image D, and/or wherein said image characteristics F are calculated from the difference between at least two of said digital images D.

According to a further embodiment, wherein said electronic control unit 16 further comprises a pair of security processing units 28 connected to said image processing unit 26 and configured to receive from said image processing unit 26 said image characteristics F.

According to a further embodiment, said security processing units 28 are configured to compare the values of the image characteristics F relative to at least two digital images D, and to determine the presence of persons P or moving objects in case the difference between the values of said image characteristics F or the values of said image characteristics F themselves exceed a predetermined security threshold.

According to a further embodiment, said image processing unit 26 is further configured to perform a projective or homographic transformation from said digital image D to obtain a new transformed digital image D referenced to a reference plane P.

According to a further embodiment, said image processing unit 26 is configured to perform said projective transformation using a projective transformation matrix calculated from the image-target of a calibration target 200 positioned and/or projected on said reference plane P.

According to a further embodiment, said imaging means 14 comprises exclusively a single opto-electronic two-dimensional imaging apparatus 20.

According to a further embodiment, said electronic control unit 16 is configured to carry out a diagnostic procedure of the functioning of said imaging means 14.

According to a further embodiment, said diagnostic process provides for altering the operation of said imaging means 14 in order to produce an expected acquisition by said imaging means 14 and to compare whether the actual acquisition by said imaging means 14 corresponds to said expected acquisition.

According to a further embodiment, a method of operation of the opto-electronic safety device 1 comprises, in sequence, the following steps:
a) receive an instruction to activate said imaging means 14;
b) activate said image acquisition means 14 for said monitoring period, so as to acquire a plurality of digital images D of said monitoring area A;
c) supply said digital images D to said electronic control unit 16;
d) control said electronic control unit 16 to determine said dangerous condition on the basis of the digital images D provided by said image acquisition means 14,
e) prevent the start-up of said machine 101 if said hazardous condition is determined, or vice versa
f) allow that machine to start up 101 if no such hazardous condition is determined.

According to a further embodiment, comprises a machine 101 and a protective barrier 102, which defines a safety perimeter within which said machine 101 is arranged and is provided with an opening 103 allowing access to said machine 101;
said safety system comprising:
an access control device, which is adapted to be associated with said gate 103 and is configured to detect and/or prevent on command access within said security perimeter through said gate 103; and
at least one optoelectronic safety device 1 of the present disclosure.

According to a further embodiment, said access control device is further configured to transmit a safety signal when not detecting and/or preventing access through said opening 103 within the security perimeter, wherein said security signal corresponds to said monitoring activation signal for said optoelectronic security device 1.

## Claims

1. Optoelectronic safety device (1) for an industrial plant (100) provided with a machine (101) positioned within a predetermined monitoring area (A),
said optoelectronic safety device (1) comprising:
• imaging means (14) configured to capture digital images (D) of said monitoring area (A), and
• an electronic control unit (16), which is configured for:
∘ control said imaging means (14) in such a way as to capture said digital images (D) ,
∘ process said digital images (D) to determine a dangerous condition on the basis of the digital images (D) provided by said imaging means (14) associated with the presence of persons (P) within said monitoring area (A),
∘ prevent the start-up of said machine (101) if said dangerous condition is determined, or vice versa
∘ allow that machine to start up (101) if said dangerous condition is not determined.

2. Device according to claim 1, wherein said dangerous condition is associated with the presence of persons (P) within said monitoring area (A).

3. Device according to claim 1 or 2, wherein said electronic control unit (16) is configured to carry out a diagnostic procedure of the operation of said imaging means (14).

4. Device according to claim 3, wherein said diagnostic process comprises, during the operation of said imaging means (14), for altering the operation of said imaging means (14) in order to produce an expected acquisition by said imaging means (14) and to compare whether the actual acquisition by said imaging means (14) corresponds to said expected acquisition.

5. Device according to any of the preceding claims, wherein said electronic control unit (16) is configured for:
∘ receive a monitoring activation signal when said machine (101) is not operational,
∘ control, in response to said monitoring activation signal, said imaging means (14) in such a way as to capture said digital images (D) for said monitoring period.

6. Device according to any of the preceding claims, wherein said electronic control unit (16) is configured to detect movement of persons (P) and/or objects within said monitoring area (A) from the difference between at least two digital images (D).

7. Device according to any of the preceding claims, wherein said electronic control unit (16) comprises an image processing unit (26), which is connected to said imaging means (14) and is configured to process said digital images (D) so as to calculate the value of one or more image characteristics (F) of said digital images (D).

8. Device according to claim 7, wherein said electronic control unit (16) further comprises a pair of safety processing units (28) connected to said image processing unit (26) and configured to receive from said image processing unit (26) said image characteristics (F).

9. Device according to any one of the preceding claims, wherein said imaging means (14) comprises exclusively a single opto-electronic two-dimensional imaging apparatus (20).

10. Method of operation of an opto-electronic safety device (1) made according to any of the preceding claims,
said method comprising, in sequence, the following steps:
a) receive an instruction to activate these imaging means (14);
b) activate said image acquisition means (14) for said monitoring period, so as to acquire a plurality of digital images (D) of said monitoring area (A);
c) provide said digital images (D) to said electronic control unit (16);
d) control said electronic control unit (16) to determine said dangerous condition on the basis of the digital images (D) provided by said imaging equipment (14),
e) prevent the start-up of said machine (101) if said dangerous condition is determined, or vice versa
f) allow that machine to start up (101) if said dangerous condition is not determined.

11. Method according to claim 10, wherein said dangerous condition is associated with the presence of persons (P) within said monitoring area (A).

12. A safety system for an industrial plant (100) comprising a machine (101) and a protective barrier (102), which defines a safety perimeter within which said machine (101) is arranged and is provided with an opening allowing access to said machine (101) configured as a safety door (103);
said safety system comprising:
• an electronically operated safety locking device (108) adapted to be arranged on said safety door (103) and configured to lock, on command, said safety door (103) in the closed position; and
• at least one optoelectronic safety device (1) realized according to any one of claims 1 to 9;
wherein said dangerous condition occurs when said safety door (103) is closed and locked by said device (108) whilst a person (P) is accidentally still present inside said protective barrier (102).
